(19) Europäisches Patentamt

European Patent Office

Office européen des brevets

(11) Numéro de publication : **0 313 422 B1**

# (12) FASCICULE DE BREVET EUROPEEN

(45) Date de publication du fascicule du brevet :
22.04.92 Bulletin 92/17

(21) Numéro de dépôt : **88402357.3**

(22) Date de dépôt : **19.09.88**

(51) Int. Cl.⁵ : **H02H 1/00**

(54) **Déclencheur statique d'un disjoncteur à boîtier moulé.**

(30) Priorité : **09.10.87 FR 8714084**

(43) Date de publication de la demande :
**26.04.89 Bulletin 89/17**

(45) Mention de la délivrance du brevet :
**22.04.92 Bulletin 92/17**

(84) Etats contractants désignés :
**BE CH DE ES GB IT LI SE**

(56) Documents cités :
**DE-A- 3 612 090**
**DE-B- 2 644 422**

(73) Titulaire : **MERLIN GERIN**
**Rue Henri Tarze**
**F-38050 Grenoble Cédex (FR)**

(72) Inventeur : **Nebon, Jean Pierre**
**Merlin Gerin Sce. Brevets**
**F-38050 Grenoble Cedex (FR)**

(74) Mandataire : **Kern, Paul et al**
**Merlin Gerin Sce. Brevets 20, rue Henri Tarze**
**F-38050 Grenoble Cédex (FR)**

Jouve, 18, rue Saint-Denis, 75001 PARIS

## Description

L'invention est relative à un déclencheur statique d'un disjoncteur électrique à boîtier moulé ayant par pôle une paire de contacts, sollicités élastiquement au contact en position fermé du disjoncteur et susceptibles de se séparer sous l'action d'un mécanisme de commande automatique sur défaut, comprenant des capteurs qui engendrent des signaux de défaut, fonction des courants parcourant les conducteurs protégés par le disjoncteur, et un ensemble de traitement auquel sont appliqués lesdits signaux de défaut pour élaborer un ordre de déclenchement du disjoncteur, lors du dépassement d'un seuil prédéterminé, ledit ordre étant temporisé en fonction de la valeur des signaux de défaut.

Les contacts d'un disjoncteur électrique doivent s'ouvrir franchement pour éviter toute position intermédiaire de répulsion des contacts, ces derniers étant néanmoins insuffisamment séparés pour l'extinction de l'arc tiré entre les contacts. La persistance de l'arc entre les contacts partiellement ouverts provoque un échauffement et une destruction du disjoncteur. La répulsion des contacts intervient sous l'effet des forces électrodynamiques lorsque le courant dépasse un seuil prédéterminé de répulsion, ce seuil dépendant de la configuration du courant dans le disjoncteur ainsi que des caractéristiques de réglage du pôle.

Pour être certain qu'un disjoncteur ne reste pas dans une position intermédiaire de répulsion des contacts, on fixe généralement le seuil de déclenchement sur défaut à une valeur inférieure à celle du seuil de répulsion. Il est difficile et coûteux de réaliser des disjoncteurs ayant des seuils de répulsion et de déclenchement parfaitement définis et pour pallier ces imprécisions, il est fréquent de choisir un seuil de déclenchement de 20 à 50 % inférieur au seuil de répulsion, ce qui se traduit par une perte de sélectivité importante.

La présente invention a pour but de permettre la réalisation d'un déclencheur dont le seuil de déclenchement et le seuil de répulsion sont confondus.

Un autre but de l'invention est un déclencheur assurant un déclenchement instantané lors d'une fermeture du disjoncteur sur un défaut.

Le déclencheur selon l'invention est caractérisé en ce qu'un détecteur d'arc est associé à chaque paire de contacts pour détecter la lumière émise par l'arc tiré lors d'une séparation des contacts, les signaux d'arc émis par lesdits détecteurs d'arc étant appliqués audit ensemble de traitement pour provoquer un déclenchement instantané lorsque simultanément les signaux de défaut dépassent ledit seuil prédéterminé.

Toute séparation des contacts, notamment par les forces électrodynamiques de répulsion, provoque la formation d'une étincelle ou d'un arc émettant une lumière facilement détectable par des capteurs optiques tels que des composants photoélectriques qui sont de préférence disposés à l'écart de la zone d'arc et reliés à cette dernière par des conducteurs de lumière telles que des fibres optiques. En disposant selon l'invention les capteurs ou détecteurs d'arc à l'intérieur du boîtier moulé, on s'affranchit d'une manière particulièrement simple des perturbations dues à la lumière extérieure. En assujettissant le déclenchement instantané du disjoncteur à la présence simultanée d'un signal d'arc et d'un signal de défaut, on évite les déclenchements intempestifs, dus aux arcs tirés entre les contacts lors de la fermeture ou de l'ouverture normales du disjoncteur. Il est facile de comprendre que la détection de la présence d'un arc et la détection d'un courant de défaut n'exigent pas de précision particulière, la lumière émise par l'arc étant surabondante et la différence entre un courant susceptible de provoquer la répulsion des contacts et le courant nominal du disjoncteur étant très importante. Selon la configuration du courant ou les caractéristiques du pôle, la répulsion électrodynamique peut intervenir sur une seule paire de contacts du disjoncteur et il est important de détecter cette répulsion en associant à chaque paire de contacts du disjoncteur, un détecteur d'arc. Dans la cas d'une fibre optique, il est possible de collecter la lumière émise par l'un quelconque des pôles du disjoncteur en faisant passer cette fibre dans les différents compartiments d'arc à proximité des paires de contacts, mais il est concevable de disposer un détecteur en un emplacement du boîtier moulé permettant de voir par des orifices pratiqués dans les cloisons internes du boîtier moulé, la lumière émise par l'une quelconque des paires de contacts. A chaque paire de contacts, peut être associée une fibre optique transmettant la lumière vers l'ensemble de traitement.

En utilisant la lumière pour détecter la répulsion des contacts, on est assuré d'éviter tout déclenchement avant la séparation des contacts sous l'effet de répulsion électrodynamique et inversement de provoquer le déclenchement instantané du disjoncteur dès la répulsion de l'une quelconque des paires de contacts du disjoncteur. Le déclencheur sur répulsion des contacts est avantageusement associé, ou assure en plus le déclenchement long retard et court retard usuel de protection sur surcharge ou sur défaut d'une amplitude inférieure au seuil de répulsion du disjoncteur.

Le déclencheur statique selon l'invention comporte des circuits de traitement analogique et/ou numérique, le circuit de déclenchement instantané sur répulsion des contacts étant avantageusement analogique afin de disposer d'un temps de réponse très réduit. La subordination du déclenchement instantané à la présence simultanée d'un signal d'arc et d'un signal de défaut peut être réalisée par un moyen approprié, notamment par un circuit ET, recevant sur ses entrées les deux signaux d'arc et de défaut.

Le déclencheur statique selon l'invention assure également la protection instantanée lors de la fermeture du disjoncteur sur défaut. Dans ce cas il est important de provoquer l'ouverture immédiate du disjoncteur, indépendamment des circuits de déclenchement court retard et long retard qui assurent une temporisation comptatible avec la sélectivité de déclenchement. Une fermeture sur défaut provoque automatiquement un arc sur les contacts qui est détecté par les détecteurs d'arc ainsi qu'une surintensité signalée par un signal de défaut, provoquant l'ouverture du disjoncteur. Le dispositif selon l'invention remplace avantageusement les contacts temporisés qui inhibent le déclencheur instantané après un certain temps.

D'autres avantages et caractéristiques ressortiront plus clairement de la description qui va suivre d'un mode de réalisation donné à titre d'exemple non limitatif et représenté au dessin annexé dans lequel la figure unique représente le schéma synoptique d'un déclencheur selon l'invention.

Sur la figure, un réseau de distribution électrique à 3 conducteurs R, S, T, d'alimentation d'une charge (non représentée) comporte un disjoncteur 10 susceptible d'interrompre le circuit en position d'ouverture. Le mécanisme 12 du disjoncteur 10 est piloté par un relais 14 polarisé de commande de déclenchement du disjoncteur en cas de surcharge ou de court-circuit. Un contact auxiliaire 16, associé aux contacts principaux 17R, 17S, 17T, du disjoncteur 10 indique la position de ces contacts principaux 17R, 17S, 17T. A chaque conducteur R, S, T est associé un transformateur de courant 18 qui délivre un signal proportionnel au courant parcourant le conducteur associé, ce signal étant appliqué à un pont redresseur 20 à double alternance. Les sorties des 3 ponts redresseurs 20 sont connectées en série dans un circuit comprenant une résistance 22, une diode zener 24 et une diode 26 pour faire apparaître aux bornes de la résistance 22 un signal de tension proportionnel à la valeur maximale du courant parcourant les conducteurs R, S, T et aux bornes de la diode 24, une tension d'alimentation des circuits électroniques. Le signal de tension est appliqué à l'entrée de l'amplificateur 28, dont la sortie est reliée à un convertisseur analogique-numérique 30. La sortie du convertisseur analogique-numérique 30 est reliée à une entrée sortie 1 d'un microprocesseur 32. Le microprocesseur 32 comporte de plus une sortie 2 reliée au relais polarisé 14, une entrée 3 recevant les signaux d'une horloge 34, une entrée 4 reliée à un clavier 36 à touche 44, une entrée 6 reliée à une mémoire morte ROM 38, une entrée/sortie 5 reliée à une mémoire non volatile NOVRAM 40, une sortie 7 reliée à un dispositif d'affichage 42 et une entrée 8 reliée au contact auxiliaire 16.

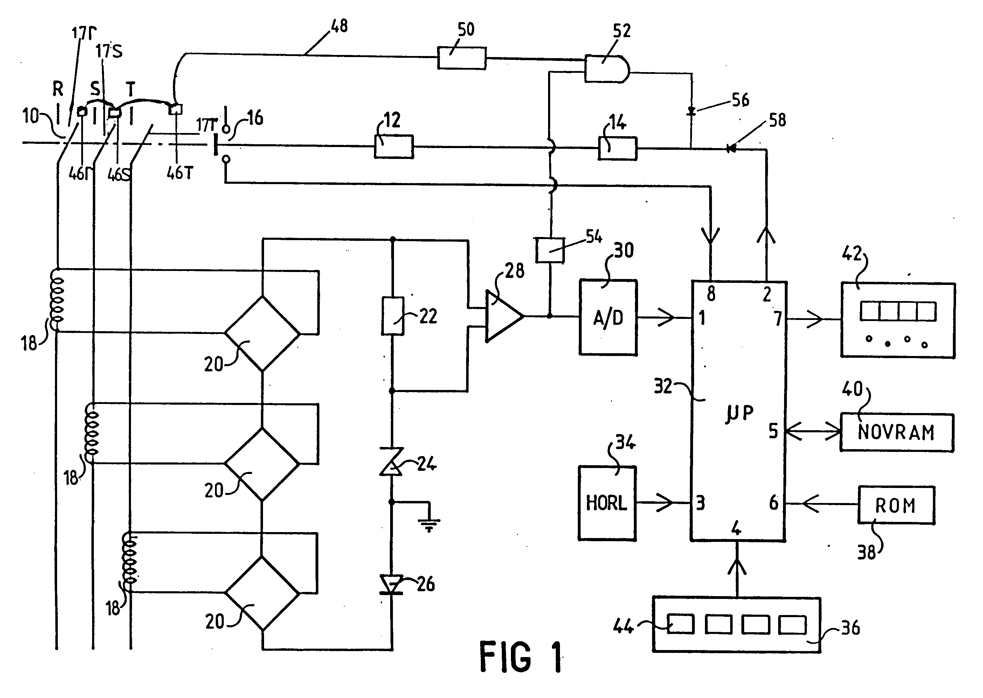

Le déclencheur selon la figure 1, assure la fonction de protection, notamment le déclenchement long retard et/ou le déclenchement court retard respectivement lors d'une surcharge et d'un défaut apparaissant dans le circuit des conducteurs R, S, T. Le signal numérique représentatif de la valeur maximale du courant dans les conducteurs R, S, T, est appliqué à l'entrée 1 du microprocesseur 32 et comparé à des valeurs de seuils stockées dans une mémoire pour détecter tout dépassement de ces seuils et engendrer un ordre de déclenchement temporisé ou instantané, qui est transmis au relais 14 pour provoquer l'ouverture du disjoncteur 10. Le déclencheur peut bien entendu assurer d'autres fonctions, notamment de protection de terre. Un déclencheur du genre mentionné est bien connu des spécialistes et est par exemple décrit dans la demande de brevet européen No. 87401714.8 du 20.7.87 publiée sous le N° EP-A-258 090, à laquelle on se reportera avantageusement.

L'invention peut être utilisée dans tout déclencheur statique et n'est en aucune manière limitée au déclencheur du type décrit ci-dessus. A titre d'exemple, nullement limitatif, les moyens de détection du courant peuvent comporter des capteurs de courant fournissant des signaux analogiques représentatifs de la dérivée du courant di/dt et dont la sortie est reliée à des circuits intégrateurs, les signaux de sortie des circuits intégrateurs étant transmis au microprocesseur par l'intermédiaire d'un convertisseur analogique-numérique. Le déclencheur statique peut également être du type analogique.

Selon la présente invention le disjoncteur 10 comporte une enveloppe du type boîtier moulé à l'intérieur de laquelle sont disposés les contacts principaux 17R, 17S, 17T, des trois pôles du disjoncteur. Les trois pôles R, S, T sont séparés par des parois définissant des compartiments internes du boîtier moulé et à chaque pôle est associé un détecteur d'arc 46R, 46S, 46T disposé à proximité des contacts principaux 17R, 17S, 17T. La lumière collectée par les détecteurs d'arc 46R, 46S, 46T est transmise par une fibre optique 48 à un composant photoélectrique 50 qui émet un signal électrique proportionnel à la lumière captée, ce signal électrique étant appliqué à une entrée d'un circuit ET 52. L'autre porte du circuit ET 52 est reliée à un circuit à seuil 54 relié à la sortie de l'amplificateur 28. La sortie du circuit ET 52 est reliée par l'intermédiaire d'une diode 56 au relais polarisé 14. Une diode 58 est insérée dans la liaison entre la sortie 2 du microprocesseur 32 et le relais polarisé 14 pour éviter toute interférence entre les signaux de déclenchement appliqués au relais polarisé 14, respectivement par le microprocesseur 32 et par le circuit de déclenchement instantané de répulsion d'arc.

Le déclencheur statique selon l'invention fonctionne de la manière suivante:

Lors d'une surcharge ou d'un défaut, le microprocesseur 32 provoque le déclenchement éventuellement temporisé du disjoncteur 10 de la manière usuelle. La séparation des contacts 17R, 17S, 17T, provoque l'émission de lumière, détectée par les détecteurs d'arc 46R, 46S, 46T, et transmise par la fibre optique 48 au composant photoélectrique 50 qui applique un signal au circuit ET 52. Ce circuit ET 52 qui reçoit sur son autre entrée un signal de défaut envoie au relais polarisé 14 un ordre de déclenchement surabondant, ce dernier ayant déjà provoqué le déclenchement du disjoncteur 10. Cet ordre additionnel ne perturbe pas le fonctionnement du déclencheur.

Dans le cas d'un courant de court-circuit de forte intensité supérieur au seuil de répulsion des contacts 17R, 17S, 17T, ou de l'un quelconque de ces contacts, ceux-ci se séparent avec formation d'un arc détecté par les capteurs 46R, 46S, 46T. Le signal d'arc appliqué au circuit ET 52, lequel reçoit simultanément le signal de défaut transmis par l'amplificateur 28 et le circuit à seuil 54, engendre un ordre de déclenchement transmis au relais polarisé 14. Ce déclenchement intervient instantanément et provoque l'ouverture immédiate des contacts du disjoncteur 10 évitant toute position intermédiaire des contacts susceptible de provoquer un échauffement et une destruction du disjoncteur. Les détecteurs 46R, 46S, 46T disposés à l'intérieur du boîtier moulé sont à l'abri de la lumière extérieure et ne risquent pas de provoquer des déclenchements intempestifs. Ils détectent par contre les étincelles ou arcs apparaissant sur les contacts principaux 17R, 17S, 17T, lors d'une fermeture ou ouverture normale du disjoncteur 10, notamment par une commande manuelle, mais le signal d'arc est bloqué par la porte ET 52, qui ne reçoit pas sur son autre entrée un signal de défaut. Tout déclenchement et réouverture intempestive du disjoncteur 10 est ainsi évité et le déclenchement instantané n'intervient que lors d'une répulsion des contacts principaux 17R, 17S, 17T. Les seuils de déclenchement court retard et long retard peuvent être choisis voisins du seuil de répulsion des contacts, toute fausse manoeuvre étant exclue par le dispositif de détection d'arc selon l'invention.

L'inhibition du signal d'arc de déclenchement instantané peut bien entendu être réalisée par des moyens différents, notamment par des détecteurs de surcharge indépendants des capteurs pilotant le déclenchement court retard et long retard. Le conducteur de lumière peut être une fibre optique en matière plastique dont l'extrémité voisine des contacts principaux 17R, 17S, 17T est dénudée sur une courte longueur pour capter la lumière de l'arc, l'extrémité dénudée de la fibre constituant le détecteur d'arc. On peut bien entendu utiliser trois fibres indépendantes, chacune associée à l'une des paires de contacts, ces trois fibres commandant le composant électronique 50 sensible à la lumière qui peut être par exemple une photodiode ou un phototransistor. L'extrémité dénudée de la fibre optique 48 qui constitue le détecteur d'arc est de préférence disposée dans une zone à l'abri de la pollution due à l'arc, ou cette extrémité est agencée pour subir un nettoyage par exemple mécanique à chaque manoeuvre du disjoncteur par tout moyen approprié.

Le déclencheur instantané à détection d'arc selon l'invention peut bien entendu être utilisé dans différents types de déclencheurs statiques, notamment du type analogique.

Le déclencheur selon l'invention assure également la protection instantanée lors d'une fermeture sur défaut de la manière suivante:

Lors d'une fermeture du disjoncteur 10 sur défaut, un arc apparaît sur les contacts principaux 17R, 17S, 17T et cet arc est détecté par les détecteurs 46R, 46S, 46T qui émettent un signal d'arc appliqué à la porte ET 52. La fermeture s'opérant sur défaut, le courant de défaut est détecté par le circuit 54 qui envoie un signal de défaut à la porte ET provoquant le déclenchement instantané du disjoncteur 10. En fonctionnement normal, les détecteurs 46R, 46S, 46T n'émettent aucun signal et seuls les déclencheurs long retard et court retard assurent la protection.

L'invention n'est bien entendu nullement limitée au mode de mise en oeuvre plus particulièrement décrit.

## Revendications

1. Déclencheur statique d'un disjoncteur électrique à boîtier moulé ayant par pôle une paire de contacts (17R, 17S, 17T) sollicités élastiquement au contact en position fermé du disjoncteur et susceptibles de se séparer sous l'action d'un mécanisme de commande (12) automatique sur défaut, comprenant des capteurs (18), qui engendrent des signaux de défaut fonction des courants parcourant les conducteurs (R, S, T) protégés par le disjoncteur, et un ensemble de traitement (20-32, 50-54) auquel sont appliqués lesdits signaux de défaut pour élaborer un ordre de déclenchement du disjoncteur, lors du dépassement d'un seuil prédéterminé, ledit ordre étant temporisé en fonction de la valeur des signaux de défaut, caractérisé en ce qu'un détecteur d'arc (46R, 46S, 46T) est associé à chaque paire de contacts 17R, 17S, 17T) pour détecter la lumière émise par l'arc tiré lors d'une séparation des contacts, les signaux d'arc émis par lesdits détecteurs d'arc (46R, 46S, 46T) étant appliqués audit ensemble de traitement (20-32, 50-54) pour provoquer un déclenchement instantané lorsque simultanément les signaux de défaut dépassent ledit seuil prédéterminé.

2. Déclencheur statique selon la revendication 1, caractérisé en ce que ledit ensemble de traitement (20-32) assure en plus dudit déclenchement instantané une fonction de déclenchement long retard et court retard.

3. Déclencheur statique selon la revendication 1 ou 2, caractérisé en ce que ledit ensemble de traitement (50-54) comporte un circuit ET (52) aux entrées duquel sont appliqués respectivement l'ordre de déclenchement de défaut et l'ordre de déclenchement d'arc.

4. Déclencheur statique selon l'une quelconque des revendications précédentes, caractérisé en ce que lesdits détecteurs d'arc (46R, 46S, 46T) sont constitués par une extrémité dénudée d'une fibre optique (48) de transmission de la lumière de la zone d'arc du disjoncteur audit ensemble de traitement.

5. Déclencheur statique selon l'une quelconque des revendications précédentes, caractérisé en ce que ledit ensemble de traitement comporte un composant électronique (50) sensible à la lumière, relié à la zone d'arc du disjoncteur par un ou des conducteurs de lumière (48).

6. Déclencheur statique selon l'une quelconque des revendications précédentes, caractérisé en ce que le circuit de traitement (50-54) de déclenchement instantané est un circuit analogique.

**Patentansprüche**

1. Elektronischer Auslöser eines Leistungsschalters mit Isolierstoffgehäuse, bestehend aus einem Kontaktpaar (17R, 17S, 17T) pro Pol, das in der Einschaltstellung des Leistungsschalters einer elastischen Beanspruchung unterliegt und im Fehlerfall über einen automatischen Schaltmechanismus (12) getrennt werden kann, aus Stromwandlern (18), die in Abhängigkeit der Ströme in den vom Leistungsschalter geschützen Leitern (R, S, T) ein Fehlersignal erzeugen, sowie aus einer Signalverarbeitungsschaltung (20-32, 50-54), die mit den genannten Fehlersignalen beaufschlagt wird, um bei Überschreiten eines festgelegten Ansprechwertes einen in Abhängigkeit vom Fehlersignal verzögerten Auslösebefehl für den Leistungsschalter freizugeben, dadurch gekennzeichnet, daß jedes Kontaktpaar (17R, 17S, 17T) von einem Lichtbogenmelder (46R, 46S, 46T) zur Erfassung des vom Lichtbogen bei einer Trennung der Kontakte ausgesandten Lichtsignals überwacht wird, und die von diesen Lichtbogenmeldern (46R, 46S, 46T) erfaßten Signale an die Signalverarbeitungsschaltung (20-32, 50-54) weitergeleitet werden, um bei gleichzeitigem Überschreiten des genannten Ansprechwerts durch die Fehlersignale eine unverzögerte Auslösung zu bewirken.

2. Elektronischer Auslöser nach Anspruch 1, dadurch gekennzeichnet, daß die Signalverarbeitungsschaltung (20-32) zusätzlich zur genannten unverzögerten Auslösung die Funktion einer kurzzeitverzögerten und einer langzeitverzögerten Auslösung gewährleistet.

3. Elektronischer Auslöser nach Anspruch 1 oder 2, dadurch gekennzeichnet, daß die genannte Signalverarbeitungsschaltung (50-54) ein UND-Gatter (52) enthält, dessen Eingängen der Fehler-Auslösebefehl und der Lichtbogen-Auslösebefehl zugeführt werden.

4. Elektronischer Auslöser nach einem der genannten Ansprüche, dadurch gekennzeichnet, daß die Lichtbogenmelder (46R, 46S, 46T) aus dem blanken Ende eines Lichtwellenleiters (48) bestehen, der das Lichtsignal aus der Lichtbogenzone des Leistungsschalters an die Signalverarbeitungsschaltung weiterleitet.

5. Elektronischer Auslöser nach einem der genannten Ansprüche, dadurch gekennzeichnet, daß die genannte Signalverarbeitungsschaltung ein lichtempfindliches elektronisches Bauelement (50) enthält, das über einen oder mehrere Lichtwellenleiter (48) mit der Lichtbogenzone des Leistungsschalters verbunden ist.

6. Elektronischer Auslöser nach einem der genannten Ansprüche, dadurch gekennzeichnet, daß die Signalverarbeitungsschaltung (50-54) für die unverzögerte Auslösung eine Analogschaltung darstellt.

**Claims**

1. A solid-state trip device of a molded case electrical circuit breaker having per pole a pair of contacts (17R, 17S, 17T) elastically urged into contact in the closed position of the circuit breaker and capable of separating by the action of an automatic operating mechanism (12) on a fault, comprising sensors (18), which generate fault signals which are a function of the currents flowing in the conductors (R, S, T) protected by the circuit breaker, and a processing unit (20-32, 50-54) to which said fault signals are applied to generate a circuit breaker tripping order, when preset thresholds are exceeded, said order being time-delayed according to the value of the fault signals, characterized in that an arc detector (46R, 46S, 46T) is associated with each pair of contacts (17R, 17S, 17T) to detect the light emitted by the arc drawn when the contacts separate, the arcing signals emitted by said arc detectors (46R, 46S, 46T) being applied to said processing unit (20-32, 50-54) to bring about instantaneous tripping when at the same time the fault signals exceed said preset threshold.

2. The solid-state trip device according to claim 1, characterized in that said processing unit (20-32) performs, in addition to said instantaneous trip, a long delay and short delay tripping function.

3. The solid-state trip device according to claim 1 or 2, characterized in that said processing unit (50-54) comprises an AND circuit (52) to whose inputs the fault tripping order and the arc tripping order are respectively applied.

4. The solid-state trip device according to any one of the above claims, characterized in that said arc detectors (46R, 46S, 46T) are formed by a bared end of an optic fiber (48) transmitting light from the arcing zone of the circuit breaker to said processing unit.

5. The solid-state trip device according to any one of the above claims, characterized in that said processing unit comprises a light-sensitive electronic component (50), connected to the arcing zone of the circuit breaker by one or more light conductors (48).

6. The solid-state trip device according to any one of the above claims, characterized in that the instantaneous trip processing unit (50-54) is an analog circuit.

FIG 1

EP 0 313 422 B1